# EUROPEAN PATENT SPECIFICATION

(11) **EP 1 006 778 B1**
(45) Date of publication and mention of the grant of the patent: **09.09.2009**
(21) Application number: 99918194.4
(22) Date of filing: 23.04.1999
(51) Int. Cl.: A01G 25/02, B29C 47/02

(54) **METHOD AND DEVICE FOR THE MANUFACTURE OF A DRIP IRRIGATION CONDUIT**
VERFAHREN UND VORRICHTUNG ZUR HERSTELLUNG EINER TROPFEN-BEWÄSSERUNGSLEITUNG
PROCEDE ET DISPOSITIF DE FABRICATION D'UN CONDUIT D'IRRIGATION AU GOUTTE A GOUTTE

(30) Priority: 27.04.1998 GR 98100147
(43) Date of publication of application: 14.06.2000
(73) Proprietor: Dermitzakis, Emmanuil, 15669 Athens (GR)
(72) Inventor: Dermitzakis, Emmanuil, 15669 Athens (GR)
(86) International application number: PCT/GR1999/000017
(87) International publication number: WO 1999/055141

(56) References cited:
- EP-A- 0 344 605
- EP-A- 0 480 632
- EP-A- 0 549 515
- EP-A- 0 872 172
- WO-A-92/05689
- WO-A-96/14939
- FR-A- 1 482 986
- US-A- 5 310 438
- US-A- 5 324 379

## Description

### State of the Art

The present invention refers to a method and device for the manufacture of a drip irrigation conduit. The drip irrigation conduit is used for irrigation and bears internally bonded individual linear straight emitters, which occupy only a part of the circumference of the tube and protrude slightly into its internal part. The problem associated with the manufacture of these drip irrigation conduits is the introduction of the emitters and their safe and very rapid bonding inside the thin wall of the tube during the manufacture of the tube itself.

In general, in order to weld these individual emitters, they must be radially compressed towards the circumference of the hot tube, applying a particular force for a particular duration.

In parallel, the new technologies in the field of plastics permit the manufacture of drip irrigation conduits of a very small thickness, just one tenth of those manufactured at present.

Furthermore, existing methods provide for the compression and welding of the emitter in the regions of hard and non-elastic shaping mechanisms and do not provide for the presence of a soft background during its compression phase, either from the side of the tube or from the side of the emitter. In parallel, the linear emitters are not always absolutely straight, as they should, but exhibit unavoidable distortions, bends and a roughness on the bent surface provided for the welding. This fact, in conjunction with the need to manufacture tubes with thin walls, renders the provision of an elastic and soft background absolutely necessary, so that it retreats during the compression to avoid punching and destruction of the tube at this point.

According to another known art, (EP-A-O344505 A2) the pressure exerted onto the emitter, is not exerted simultaneously across its whole surface, nor is similar along the length of the emitter. Whereas the force P exerted onto the emitter and presses it onto the tube is constant at all phases and only depends on the clearance X2 between the tube and the means of compression, i.e. the protrusion, which is fixed, the surface that receives this force and which determines the degree of pressure exerted, gradually increases from 0% at the start, to 100 % when the contact and the penetration of the emitter into the tube are completed. Thus, the phenomenon is observed at the start, when the penetration length X of the emitter is very small (near zero), the fixed force, P, due to the fixed clearance x to create enormous pressures, p.

p= P/x, with x tending to 0, p tending to infinity.

As a result of this exertion of force at a simple point, the emitter is immersed at its front inside the wall at the moment of the first contact and is simultaneously raised at its back. It develops a tendency to rotate around the point of the first contact, with a risk to destroy the tube.

Another disadvantage of the same known technology is that it requires acceleration of each emitter from zero speed to the speed of production of the tube, something that necessitates the use of highly accurate mechanisms, and which leads to significant delays. In another art (EP-A-O480632 A2) the emitter comes first into contact with the tube before the shaping mechanism, and is mechanically compressed during this phase. However, in this phase, the tube is very soft and does not tolerate mechanical pressure without a risk, nor can tolerate the friction force developed in the emitter. Furthermore, according to this technology, the final compression is performed with a series of wheels, which do not feature an independent motion, are not formed by soft materials, and each one exerts a point and not uniform pressure onto the hot and thin tube.

In this case, friction develops both between the wheels and the tube, as well as between the emitter and the protruding element and between the axis of rotation and the wheels, which retard and delay the thin tube, with a risk of destroying it.

In another known technology US 5.324.379, the following remarks can be made:

The compression is taking place between a fixed protrusion and a fixed calibrator. This means that the compression is performed between two absolutely fixed and non-elastic surfaces, inside the fixed calibrator. It has exactly the same effect and problems as described above in the application EP-A-O344505 A2.

There is a continuous length of thread and on which the emitters are fixed at predefined spaces.

The first contact of the emitter with the tube is taking place in the beginning of the fixed calibrator. It has exactly the same effect and problems as described above in the application EP-A-O344505 A2.

In general US 5.324.379 and EP-A-O 344505 A2 are the same regarding the associated problems. Both compress the emitter inside the fixed calibrator and the fixed protrusion, and the first contact of the emitter is performed at the beginning of the fixed calibrator. On the other hand their difference lays only in the emitter's driving mechanism
i. EP-A-O344505 A2 utilizes a pusher in order to insert the emitters inside the tube at predefined spaces
ii. US 5.324.379 utilizes a non-elastic, continuous length of thread where on that are fixed the emitters at predefined space, at a former stage.

In both cases US 5.324.379 and EP-A-O344505 A2 have the same disadvantage already discussed above.

### Brief Description of the Invention

The present invention describes a new method for the manufacture of drip irrigation conduits without the above mentioned disadvantages.

The drip irrigation conduit with the internally welded emitters that occupy only a part of the circumference of the tube and protrude slightly inside it is manufactured in a continuous form by an extruder.

The emitters are driven in continuous contact to each other and continuously move the one behind the other onto a protrusion located inside the tube, with a speed definitely smaller than the speed of production of the tube. In particular, for each tube production speed, and for each distance between the emitters in the ready drip irrigation conduit, a speed of continuous emitter movement exists, which is far smaller than the speed of tube production.

At the end of the protrusion, an inclined plane exists and then a horizontal smooth part. The emitters come into contact with the already formed tube after and away from the fixed calibrator, at the end of the inclined plane of the protrusion, where, one by one, they are slightly welded to predetermined distances at the upper internal surface. The first contact of the emitter is effected at the clearance between the steady calibrator and an external band, which moves outside and in contact with a tube with a speed similar to that of the tube being produced. In the sequel, the emitter assumes the speed of the tube and is transported by the tube to the region of the final welding.

In particular, the emitter is compressed between the elastic external band and the flat part of the fixed protrusion. Essentially, sliding exists and a speed difference between the emitter and the flat part, which in any case develops axial friction forces. If these axial forces are developed in regions where the tube is still not formed, as e.g. before the calibrator or inside the calibrator, the method will not function. The band is not only flexible, but is also elastic and soft, it slightly retreats and exerts the same steady pressure along all the length during the penetration of the tube with the slightly welded emitter.

The emitter background support during the compression phase, is the fixed metallic protrusion inside the tube. A fixed clearance X2 is retained smaller than the height H of the emitter between the internal protrusion and the upper internal surface of the tube. In other cases, the systems of rotating band as well as the internal protrusion may also have elastic seating. The emitter in all its variations is compressed, exploiting the elastic seating of the systems or the elasticity of the materials of the external rotating band. The manufacture of the tubes is effected absolutely safely without the risk of rupture of the tube due to friction forces developed in a fragile phase, and without the risk of rupture of the tube due to non-elastic materials of its support background.

### Description of the Drawings

Drawing 1 General Arrangement of the production line.
Drawing 2 The present invention with a combination of external band, fixed protrusion and driving of the emitters via an inclined plane.
Drawing 3 Detail of Drawing 2

### Detailed Description of the Invention

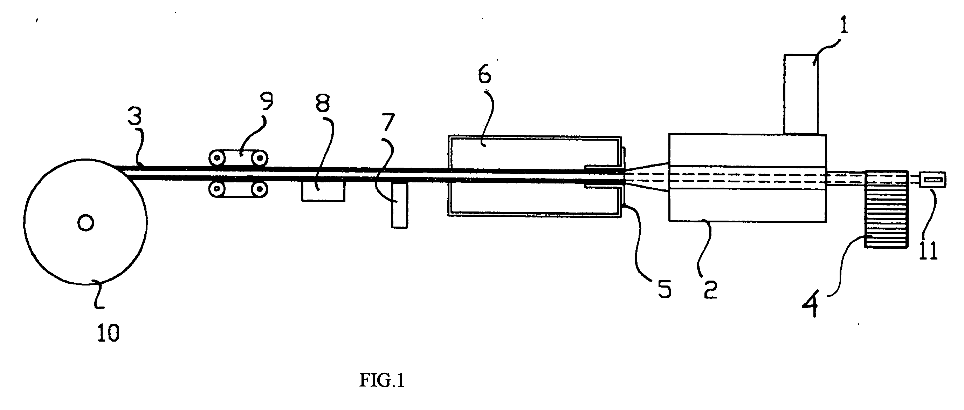

Drawing 1 illustrates the overall arrangement of an drip irrigation conduit production line of the present invention.

It consists of the extruder 1, the angular head 2, through which the individual emitters 4 are entered inside the cylindrical tube 3. The emitters 4 occupy only a part of the circumference of the tube 3. The hot tube then passes via the fixed calibrators 5 attached to the vacuum water bath 6, where the welding of the emitters 4 to the tube 3 is effected.

In the sequel, the cold and shaped tube, passes from the recognition system 7, where the position of the emitters is accurately recognised, so that the water outlet hole is perforated above the suitable outlet point of the welded emitter 4.

For the steady and at equal speed passage of the tube 3 from the aforementioned positions, the pulling mechanism 9 is provided. The ready drip irrigation conduit is finally rolled in the winding equipment 10 at the end of the production line. The emitter feed mechanism consists of the storage of the emitters 4 and the pushrod 11.

Both the emitter 4 and the tube 3, are made of plastic material and are autogeneously welded with simple compression. The emitter features a meander-like cross section for pressure drop or for the adjustment of water supply.

A particular water inlet and outlet exists in the emitter.

A hole is opened in the tube, above the water outlet location. For this reasons the perforating mechanism 8 is provided.

All the above-described arrangement is considered to be known.

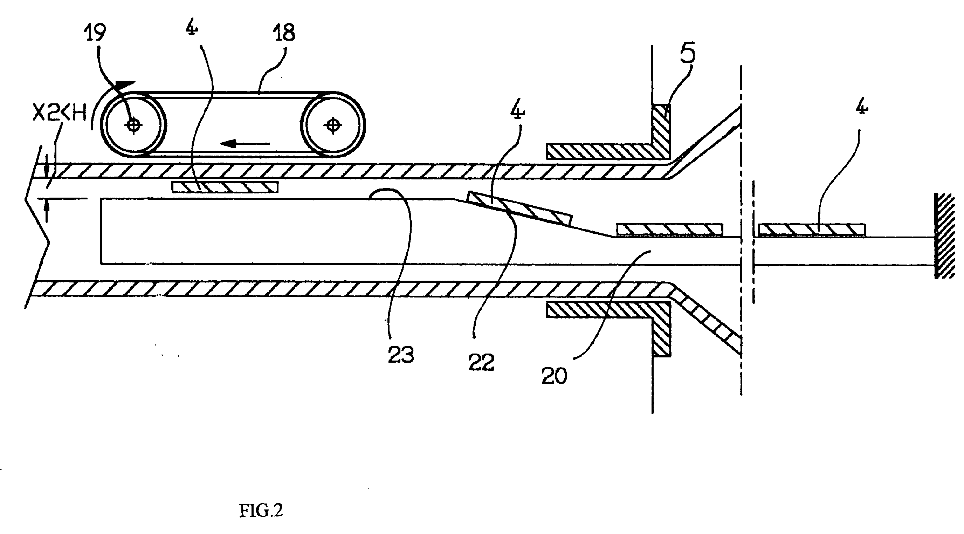

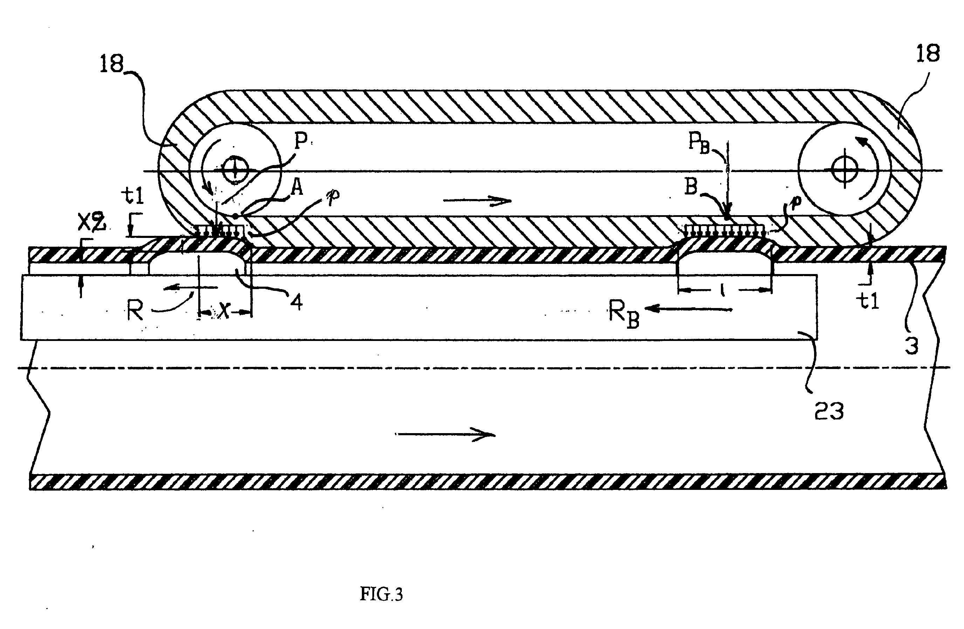

Drawings 2 and Drawing 3 illustrate the present invention. There is an external endless band 18 with the rotation mechanism 19. The band moves continuously with a speed similar to that of the tube being produced. The emitters are driven in continuous contact to each other and continuously move the one behind the other onto the protrusion 22 located inside the tube 3, with a speed definitely smaller than the speed of production of the tube 3. In particular, for each tube production speed, and for each distance between the emitters in the ready drip irrigation conduit, a speed of continuous emitter movement onto the protrusion exists, which is far smaller than the speed of tube production.

At the end of the protrusion, an inclined plane 22 exists and then a horizontal smooth part 23. The emitters come into contact with the already formed tube 3 after and away from the fixed calibrator 5, at the end of the inclined plane 22 of the protrusion 20, where, one by one, they are slightly welded to predetermined distances at the upper internal surface. The clearance X2 between the upper internal surface of the tube 3 and the plane 23 of the protrusion is and remain smaller than the height H of the emitter. The contact between emitter and tube 3 is effected at the end of the inclined level 22 in the clearance between the calibrator 5 and the external band 18, in order that the tube is not damaged, which is already formed for additional safety. From this position of first contact, the emitter assumes the speed of the tube, and penetrates horizontally into the compression stage. The compression for the final welding is effected further and away from the fixed calibrator 5 located inside the water bath.

In particular, the emitter 4 is compressed between the elastic external band 18 and the flat part 23 of the fixed protrusion 22. Essentially, sliding exists and a speed difference between the emitter and the flat part 23, which in any case develops axial friction forces. If these axial forces are developed in regions where the tube is still not formed, as e.g. before the calibrator or inside the calibrator, the method will not function. Drawing 3 illustrates a detail of Drawing 2. From the drawing, it is evident that as the band 18 is not only flexible, but is also elastic and soft and retains and surrounds steadily and at a long length the tube 3 behind the emitter 4, protecting it. It slightly retreats and exerts the same steady pressure along all the length during the penetration of the tube with the slightly welded emitter, the development of the force P which compresses the emitter, depends only on the penetration length X of the emitter under the soft band. As the pressure p due to the elasticity of the material is steady in all parts of the band, for each force P developing, the relationship: P = χ·p holds. Thus, in position A of the first contact, both the pressure p, as well as the force P are equal to zero, whereas in the phase of full penetration, the force P has the maximum value:

P= L·p where L is the length of the emitter.

As the friction R = µ P is developed accordingly, in the phase of the first contact, no friction and hence no sliding occurs and the emitter penetrates smoothly into the compression region. In the same smooth manner, with a gradual decline of the force P, it comes off the horizontal protrusion 23. This does not apply in other known technologies. Thus, neither immersion forward nor any tendency of the emitter to rotate exists, and as the pressure at every location of the band is fixed, the wall t1 of the tube in the welding position remains constant throughout the length L of the emitter. In parallel, the local deformation and the increased adherence of the external band to the tube in the region of the emitter, help the tube to overcome the friction force that develops between the emitter and the protrusion, without the need of exertion of some horizontal force for emitter promotion. For the manufacture of the drip irrigation conduits of the drawing 2 where the first contact of the emitter is effected in a region where the tube is already cold and shaped in its exterior part, pre-heating, especially of the external curved surface of the emitter is required, before its introduction into the tube. Pre-heating is also necessary in all variations where the emitter comes into first contact with the upper part of the tube, inside or outside of the fixed calibrator.

The variations of Drawing 2, where the compression is performed between the external band and a fixed protrusion, an additional elastic Seating should be provided with return springs for the fixed protrusions or parts only of the protrusions (Not drawn).

Respectively, with minor modifications of the material, the construction and the arrangement of the bands, all these methods with the rotating bands, could be also used for the manufacture of drip irrigation conduits from plastic tapes following local heating required for the welding of the emitters, are wound and welded along the length for the formation of drip irrigation conduits.

## Claims

1. Method for the manufacture of drip irrigation conduits with, internally welded individual emitters (4) introduced and welded inside the tube (3) during its production phase, occupying only a part of the circumference of the tube (3) and slightly protruding in its internal part wherein the hot tube (3) passes via a fixed calibrator (5), **characterized in that,** emitter's final welding is achieved by the compression between two opposite surfaces outside and inside the tube, one of them which is outside (18) the tube (3) downstream of the fixed calibrator (5), is a driven endless band, which forms an elastic support background to the pipe, and which moves with a speed similar to that of the tube (3) being produced.

## Patentansprüche

1. Verfahren zur Hersellung einer Tropfen-bewaεssserungs Leitung mit innen geschweissten individual Tropfern (4), gefuehrten und geschweissten in das Inneren der Leitung (3) waehrend der Phase ihrer Herstellung, welche nur ein Teil des Kreisumfanges der Leitung (3) besitzen und welche leicht in dem Inneren der Leitung hervorspringen, wo die heisse Leitung (3) durch einem Kalibrator (5) geht, charachterisiert dadurch, dass die Endschweissung durch die Pressung zwischen zwei gegenueber liegenden Oberflaechen erfolgt, wobei eine in das Innerem und eine ausserhalb der Leitung (3) sich befindet, von dennen die eine, die ausserhalb der Leitung (3) und nach dem fixen Kalibrator (5) sich befindet, ein endloses Band ist, der eine elastische Unterstuetzung der Leitung (3) bildet, und der mit einer Geschwindigkeit gleich derjenigen mit deren die Leitung (3) hergestelt wird, sich bewegt.

## Revendications

1. Méthode pour la fabrication d'un conduit goutte à goutte avec des émetteurs (4) soudés à l'intérieur qui sont introduits et soudés à l'intérieur du tuyau (3) lors du stade de la production et qui occupent une partie uniquement de la circonférence du tuyau (3) et saillent à l'intérieur du tuyau (3), où le tuyau chaud passe par un calibreur fixe (5), **caractérisée par le fait que** le soudage final est réalisé par la compression de deux surfaces opposées à l'intérieur et à l'extérieur du tuyau (3), l'une d'entre elles, celle à l'extérieur (18) du tuyau (3) en aval du calibreur (5), étant une courroie sans fin mobile qui forme un support élastique pour le tuyau et qui roule à une vitesse égale à celle du tuyau fabriqué.
